# EUROPEAN PATENT SPECIFICATION

(11) **EP 0 806 592 B1**
(45) Date of publication and mention of the grant of the patent: **19.03.2003**
(21) Application number: 96120385.8
(22) Date of filing: 18.12.1996
(51) Int. Cl.: F16H 61/06

(54) **A hydraulic control apparatus for an automatic transmission**
Hydraulisches Steuergerät für ein automatisches Getriebe
Dispositif de commande hydraulique pour une transmission automatique

(30) Priority: 30.04.1996 JP 10978796
(43) Date of publication of application: 12.11.1997
(73) Proprietor: AISIN AW CO., LTD., Anjo-shi Aichi-ken 444-11 (JP)
(72) Inventor: Kubo, Takayuki, Anjo-shi, Aichi-ken 444-11 (JP); Nishida, Masaaki, Anjo-shi, Aichi-ken 444-11 (JP); Yamamoto, Yoshihisa, Anjo-shi, Aichi-ken 444-11 (JP); Suzuki, Akitomo, Anjo-shi, Aichi-ken 444-11 (JP); Tsutsui, Hiroshi, Anjo-shi, Aichi-ken 444-11 (JP); Tsukamoto, Kazumasa, Anjo-shi, Aichi-ken 444-11 (JP)
(74) Representative: VOSSIUS & PARTNER

(56) References cited:
- EP-A- 0 317 936
- EP-A- 0 327 004
- EP-A- 0 354 493
- EP-A- 0 644 361
- EP-A- 0 707 164
- US-A- 5 361 651

## Description

The present invention relates to a hydraulic control apparatus for an automatic transmission mounted on a vehicle, more specifically, to a hydraulic control during a so-called clutch-to-clutch (change-over) speed change operation wherein a predetermined speed stage is obtained by engaging some frictional engagement elements while disengaging other frictional engagement elements, and particularly to the hydraulic control during the clutch-to-clutch speed change operation at the time of an up-shift.

In general, there are various traveling conditions possible in a vehicle, including a power-on state in which an accelerator pedal is depressed during traveling so that driving power is transmitted from an engine to wheels, a power-off state in which the accelerator pedal is released during traveling so that driving power is not transmitted from the engine to wheels, high-speed driving, high-torque driving, low-torque driving, low-speed driving and the like. Depending on each of the above traveling conditions, speed change control is executed in the automatic transmission.

A conventional hydraulic control apparatus for the above-mentioned clutch-to-clutch (change-over) speed change is disclosed in Japanese Patent Application Laid-Open No.307524/1994. In this conventional apparatus, the property of change in engagement forces for disengaging pre-shift frictional engagement elements is set by a plurality of pre-shift control stages arranged continuously in order and the property of change in engagement forces for engaging post- shift frictional engagement elements is set by a plurality of post-shift control stages arranged continuously in order. Depending on a change in revolution of the input shaft, the pre-shift control stage and the post-shift control stage are executed in parallel such that a speed change from the pre-shift to the post-shift is conducted. Upon execution of the pre-and post-shift control stages, all the stages or some selected stages are executed continuously in the corresponding order and then a shift-up speed change in the power-off state as well as in the power-on state is executed smoothly without causing any delay.

As described above, the hydraulic control apparatus of the prior art detects the traveling condition of the vehicle such as the power-on and power-off states, and selects an appropriate control stage based on a result of the detection. Thus, a control logic for selecting the above-mentioned appropriate control stage is necessary, which inevitably requires a corresponding memory capacitance.

In EP-A-327 004 an apparatus for shift control of an automatic transmission in accordance with the preamble of claim 1 is disclosed. In case of an upshift, one friction coupling element is engaged, while an other coupling element is disengaged. A coupling force of one friction coupling element is controlled by a feed-back control. Further the coupling force of the other friction coupling element is controlled by a feed-forward control by using an amount of change in a target number of turbine revolutions aₘ(k) for each control cycle which is calculated in the feed-back control.

Accordingly, an object of the present invention is to provide a hydraulic control apparatus for an automatic transmission capable of achieving an appropriate speed change control under any traveling condition without increasing the control logic in up-shift control by the clutch-to-clutch (change-over) speed change.

According claim 1 of the present invention, there is provided a hydraulic control apparatus for an automatic transmission comprising: an input shaft to which a driving power from an engine output shaft is input; an output shaft connected to wheels; a plurality of frictional engagement elements for changing a driving power transmission path between the input shaft and the output shaft; and hydraulic servos for engaging and disengaging the plurality of the frictional engagement elements; the hydraulic control apparatus engaging a first frictional engagement element in the plurality of the frictional engagement elements while disengaging a second frictional engagement element so as to achieve an up-shift to a predetermined speed stage; further comprising hydraulic operating means for controlling hydraulic pressure of at least the hydraulic servos for the first and second frictional engagement elements; and a control section for receiving signals from respective sensors based on a vehicle traveling condition and outputting hydraulic control signals to the hydraulic operating means; the control section comprising engagement side hydraulic control means for calculating a change in hydraulic pressure applied to the hydraulic servo for the first frictional engagement element and outputting the result to the hydraulic operating means; and disengagement side hydraulic control means for calculating a disengagement hydraulic pressure of the hydraulic servo for the second frictional engagement element based on a holding torque of said first engagement element which is calculated from the hydraulic pressure applied to the hydraulic servo for the first frictional engagement element and on an input torque which is inputted to said input shaft and outputting the result to the hydraulic operating means.

According to claim 2 of the present invention, there is provided a hydraulic control apparatus for an automatic transmission wherein the change in hydraulic pressure applied to the hydraulic servo for the first frictional engagement element has a sweep-up with a predetermined gradient calculated from a holding pressure immediately before the start of an inertia phase which is obtained from an input torque, and a predetermined period of time which takes a response delay in hydraulic pressure into account.

According to claim 3 of the present invention, there is provided a hydraulic control apparatus for an automatic transmission wherein the disengaging hydraulic pressure of the hydraulic servo for the second frictional engagement element has a gradient corrected by first tie-up correcting means which is set so as to ensure a predetermined amount of engine blow.

According to claim 4 of the present invention, there is provided a hydraulic control apparatus for an automatic transmission wherein the disengaging hydraulic pressure of the hydraulic servo for the second frictional engagement element is corrected by second tie-up correcting means for setting an offset value of the gradient of the disengaging hydraulic pressure.

According to claim 5 of the present invention, there is provided a hydraulic control apparatus for an automatic transmission wherein the first and second tie-up correcting means are modified by learning based on the amount of engine blow.

According to claim 6 of the present invention, there is provided a hydraulic control apparatus for an automatic transmission wherein the disengaging hydraulic pressure of the hydraulic servo for the second frictional engagement element is controlled by a feedback control for detecting the amount of engine blow at the time of a speed change and preventing the disengaging hydraulic pressure from being decreased until the amount of engine blow reaches a predetermined value if the amount of engine blow exceeds a predetermined value.

According to claim 7 of the present invention, there is provided a hydraulic control apparatus for an automatic transmission wherein the first and second tie-up correcting means change depending on the temperature of oil.

According to claim 8 of the present invention, there is provided a hydraulic control apparatus for an automatic transmission wherein the amount of change in hydraulic pressure in the hydraulic servo for the second frictional engagement element until the second frictional engagement element is completely drained from a predetermined disengaging hydraulic pressure thereof is changed depending on a vehicle traveling condition (e.g., power-on or power-off).

According to claim 9 of the present invention, there is provided a hydraulic control apparatus for an automatic transmission wherein the amount of a change in hydraulic pressure until the predetermined disengaging hydraulic pressure is completely drained is set to a value which is larger at the time of power-on than at the time of power-off.

According to the above-described construction, when up-shift is conducted by engaging the first frictional engagement element and disengaging the second frictional engagement element, the engagement side hydraulic pressure for the first frictional engagement element sweeps up with a gradient calculated from the holding pressure obtained from, for example, the input torque and a predetermined interval of time. The disengaging hydraulic pressure for the second frictional engagement element is calculated depending on the aforementioned engagement side hydraulic pressure.

According to claim 1 of the present invention, since the engagement side hydraulic pressure is controlled primarily while the disengagement side hydraulic pressure is controlled secondarily, even in the power-off state, the disengagement side hydraulic pressure is prevented from being released quickly because of a relatively small input torque, as in the case where the disengagement side hydraulic pressure is controlled primarily. Therefore, it is possible to prevent the engagement side hydraulic pressure from becoming out of control. Regardless of a traveling condition such as the power-on and power-off states, speed control can be conducted on the same control stage by controlling the engagement side primarily. Accordingly, there is no need to select an appropriate control stage by detecting the traveling condition of the vehicle, which allows the overall memory capacitance to be reduced.

According claim 2 of the present invention, since the predetermined gradient of the engagement side hydraulic pressure is set by the predetermined period of time which takes response delay in the engagement side hydraulic pressure into account, it is possible to prevent the overall response delay in hydraulic pressure.

According to claim 3 of the present invention, since the disengagement side hydraulic pressure is corrected by the first tie-up correcting means so as to ensure the predetermined amount of engine blow, a predetermined overlap by the frictional engagement elements on both the engagement and disengagement sides is maintained properly, which prevents an unnecessary engine blow-up and an excessive tie-up. Thus, an appropriate speed change control is ensured without giving any uncomfortable feeling to a driver.

According to claim 4 of the present invention, since the gradient of the disengagement side hydraulic pressure is offset by the second tie-up correcting means while taking a response delay in hydraulic pressure of the engagement side frictional engagement element into account, it is possible to prevent an unnecessary engine blow-up which may be caused by a deviation of change-over timing resulting from such response delay in hydraulic pressure of the engagement side. Thus, no uncomfortable feeling is given to the driver.

According to claim 5 of the present invention, since the deviation of engine blow-up due to the aging of the frictional engagement elements can be prevented by modifying the first and second tie-up correcting means by learning so as to always ensure a constant engine blow-up amount, no uncomfortable feeling is given to the driver. Thus, an appropriate speed change feeling is always obtained.

According to claim 6 of the present invention, even if the engine blows up over a predetermined value during speed change operation because of erroneous detection of the engine revolution, throttle opening degree or the like, the blow-up of the engine can be suppressed immediately by feedback control. Thus, no uncomfortable feeling is given to the driver.

According to claim 7 of the present invention, a change in hydraulic pressure response time based on a change in viscous resistance depending on the temperature of oil is corrected by the first and second tie-up correcting means. Accordingly, an unnecessary engine blow-up and an excessive tie-up are prevented, and a feeling of stability is always ensured in the speed change operation.

Particularly at the time of the power-off in which the input torque is small, dragging torque is generated by a predetermined disengaging hydraulic pressure for disengaging the second frictional engagement element (e.g. piston stroke pressure). If the disengaging hydraulic pressure is completely released quickly, the output torque fluctuates, which may cause a shock in speed change. Furthermore, if the predetermined disengaging hydraulic pressure is released with delay at the time of the power-on, a tie-up may occur and the torque from the output shaft may drop sharply. However, according to claim 8 of the present invention, since the amount of change in hydraulic pressure (that is, the gradient thereof) can be changed depending on the traveling condition of the vehicle, appropriate speed change control can be always executed.

According to claim 9 of the present invention, at the time of the power-on, the amount of change in the disengaging hydraulic pressure is set to a relatively large value and the release thereof is implemented relatively early. Thus, an excessive tie-up can be avoided. On the other hand, at the time of the power off, the amount of change in the disengaging hydraulic pressure is set to a relatively small value and the release thereof is implemented gradually. Thus, any shock in speed change resulting from torque fluctuation can be avoided.

Fig. 1 is a block diagram showing an electronic control section according to the present invention.

Fig. 2 is a schematic drawing of a hydraulic circuit according to the present invention.

Fig. 3 is a diagram showing a main flow of the 2-3 speed change control.

Fig. 4 is a diagram showing a flow of the speed change timing control.

Fig. 5 is a diagram showing a flow of the main clutch control and the sub-clutch control.

Fig. 6(a) is a diagram showing a flow of the torque phase speed change control of the main clutch and Fig. 6(b) is a diagram showing a flow of the initial speed change control of the sub-clutch.

Fig. 7 is a diagram showing a map for obtaining a tie-up ratio.

Fig. 8 is a diagram showing a feed forward control by learning of the tie-up ratio.

Fig. 9 is a diagram showing a real time feedback control.

Fig. 10 is a diagram showing the characteristics of hydraulic pressure at the time of shift-up control at a high torque.

Fig. 11 is a diagram showing the characteristics of hydraulic pressure at the time of shift-up control at a low torque.

Fig. 12 is a diagram showing a flow of release control according to another embodiment.

Fig. 13 is a diagram showing the characteristics of hydraulic pressure.

Fig. 14 is a diagram showing a change in the amount of change in the disengaging hydraulic pressure.

### DESCRIPTION OF THE PREFERRED EMBODIMENTS

The automatic transmission according to the present invention has a plurality of frictional engagement elements such as clutches, brakes and the like, and it also has an automatic speed changing mechanism (not shown) in which a power transmission path of a planetary gear is selected by selectively disengaging /engaging these frictional engagement elements. The input shaft X of the automatic speed changing mechanism is coupled to the output shaft of an engine through a torque converter and the output shaft is coupled to driven wheels.

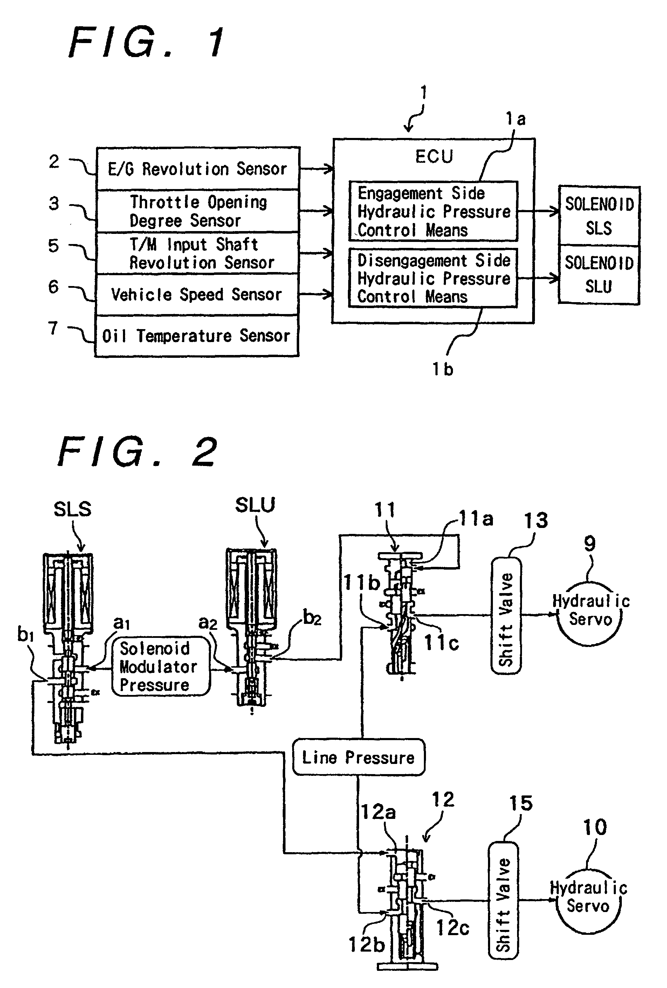

Fig. 1 is a block diagram showing electronic system control. Reference numeral 1 denotes an electronic control section composed of a microcomputer, which receives signals from an engine revolution sensor 2, a throttle opening degree sensor 3, a transmission (automatic transmission) input shaft revolution (= turbine revolution) sensor 5, a vehicle speed (= automatic transmission output shaft revolution) sensor 6, and an oil temperature sensor 7 respectively. Furthermore, the electronic control section 1 outputs to linear solenoid valves SLS and SLU of a hydraulic circuit. The electronic control section 1 comprises engagement side hydraulic pressure control means 1a which calculates a change in hydraulic pressure supplied to a hydraulic servo 9 for a first frictional engagement element (main clutch, which will be described later) and outputs a result thereof to the linear solenoid valve (hydraulic pressure operating means) SLU, and disengagement side hydraulic pressure control means which calculates a disengaging hydraulic pressure supplied to a hydraulic servo 10 for a second frictional engagement element (sub-clutch, which will be described later) depending on the change in hydraulic pressure supplied to the hydraulic servo 9 and outputs a result thereof to the linear solenoid valve (hydraulic pressure operating means) SLS.

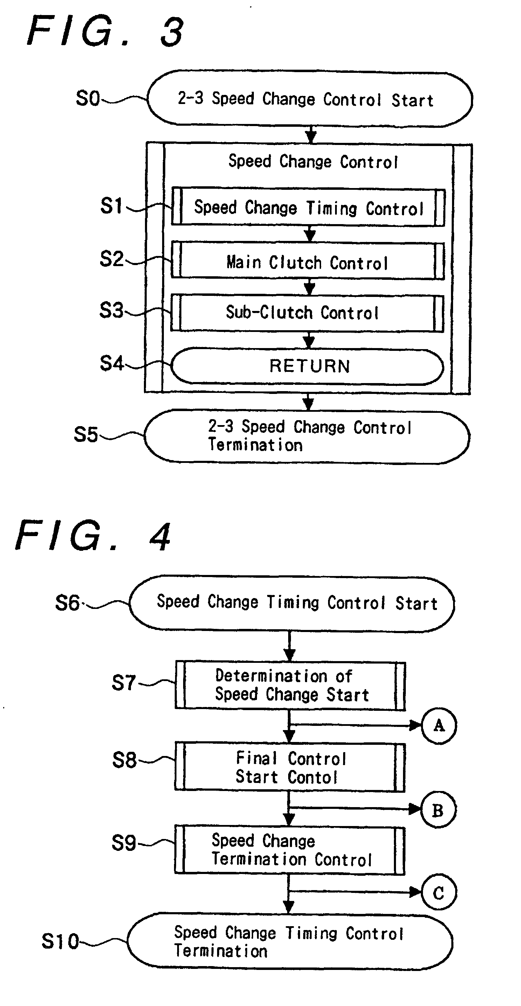

Fig. 2 is a schematic diagram showing a hydraulic circuit, which comprises a plurality of hydraulic servos 9, 10 for engaging/disengaging a plurality of the frictional engagement elements for achieving speed change stages, for example, five forward speeds and a single backward speed by switching the power transmission path of a planetary gear unit in the automatic transmission mechanism as well as the aforementioned two linear solenoid valves SLS, SLU. Solenoid modulator pressures are supplied to the input ports a₁, a₂ of the linear solenoid valves SLS, SLU. Control hydraulic pressures from the output ports b₁, b₂ of the linear solenoid valves are supplied to control hydraulic pressure chambers 11a, 12a of pressure control valves 11, 12 respectively. The pressure control valves 11, 12 receive line pressures supplied to the input ports 11b, 12b thereof respectively. Then, pressures adjusted by the aforementioned control pressures are supplied from the output ports lic, 12c to the hydraulic servos 9, 10 through shift valves 13, 15 respectively.

The hydraulic circuit shown herein is intended to illustrate an overall concept of the present invention, and the hydraulic servos 9, 10 and the shift valves 13, 15 are represented symbolically. Actually, there may be provided a plurality of hydraulic servos corresponding to the automatic speed change mechanism and also a plurality of shift valves for switching hydraulic pressures to the hydraulic servos.

Then, up-shift control by change-over (clutch to clutch) of the frictional engagement elements will be explained, based on the case of a speed change from the second to the third speed (2-3 speed change) . The 2-3 speed change is achieved by engaging a fifth brake (B5) and disengaging a fourth brake (B4) in the automatic speed changing mechanism (not shown). At the time of up-shift, the engagement side hydraulic pressure is controlled primarily while the disengagement side hydraulic pressure is controlled depending on the engagement side hydraulic pressure. Consequently, the fifth brake which is on the engagement side serves as a main clutch MC while the fourth brake which is on the disengagement side serves as a sub-clutch SC.

As shown in Fig. 3, if the 2-3 speed change control is executed successively, that is, from speed change timing control (S1), through main clutch control (S2) and sub-clutch control (S3) to return operation(S4). Then, the 2-3 speed change control is terminated (S5).

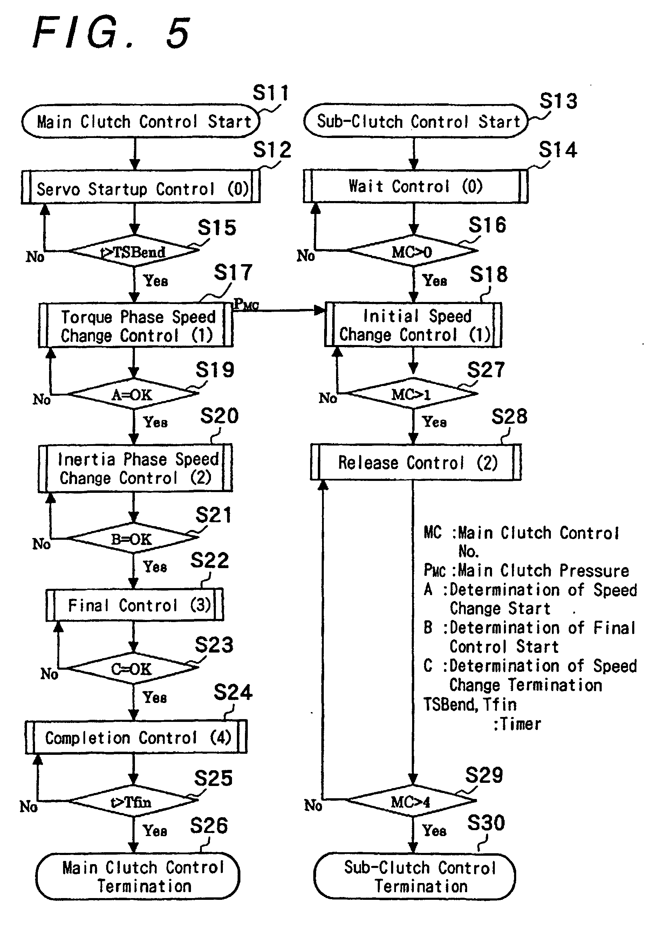

As shown in Fig. 4, if the speed change timing control is started (S6), a judgment on speed change startup (A) is made (S7) and the result thereof is related to a judgment A in the flow of Fig. 5 (S19) which will be described later. Then, a judgment on termination control startup is made (S8) and the result thereof is related to a judgment on termination control startup B in the flow of Fig. 5 (S21). Furthermore, a judgment on speed change termination is made (S9) and the result thereof is related to a judgment on speed change termination C in the flow of Fig. 5 (S23). Then, the speed change timing control is terminated (S10).

Now, referring to Fig. 5, main clutch control and sub-clutch control will be explained. After the main clutch control has been started (S11), namely after the 2-3 speed change has been determined, servo startup control (0) is started (S12). At the same time, after sub-clutch control has been started (S13), namely, after the 2-3 speed change has been determined, wait control (0) is executed (S14). The wait control is continued for a predetermined period of time TSB_{end} and after that period of time has lapsed, torque phase speed change control (1) is executed (S15). Synchronously therewith, the wait control of the sub-clutch side is terminated and then initial speed change control (1) is executed (S16). In the servo startup control (S12), the main clutch MC which is on the engagement side is temporarily supplied with a sufficient amount of oil for starting a piston stroke. Then, the hydraulic pressure is controlled to a predetermined value (piston stroke pressure) such that the piston is moved to narrow a gap between friction plates, and a period of time TBS sufficient for the servo startup is preliminarily set. On the other hand, in the aforementioned wait control (S14), the sub-clutch SC which is on the disengagement side remains engaged to maintain the second speed stage until the servo startup control is terminated.

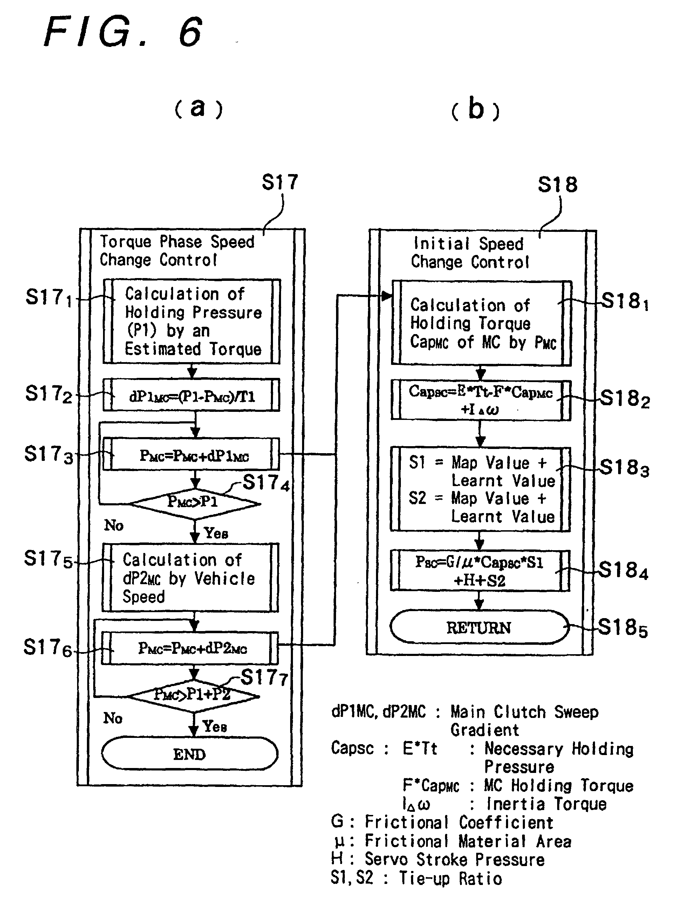

Subsequently, torque phase speed change control (1) is executed in the main clutch MC (S17) and initial speed change control (1) is executed in the sub-clutch SC (S18). As shown in Fig. 6(a), in the torque phase speed change control (S17), a holding pressure P1 is calculated from an estimated input torque. That is, a target engagement hydraulic pressure P1 immediately before an input revolution calculated based on the input (turbine) torque starts to change is calculated (S17₁). The aforementioned input torque is calculated by obtaining an engine torque from a throttle opening degree and an engine revolution based on a map, calculating a velocity ratio from the input/output revolutions of the torque converter, obtaining a torque ratio from the velocity ratio according to the map, and finally multiplying the engine torque by the torque ratio.

Furthermore, a first sweep gradient dP1_{MC} is calculated from the holding pressure (target engagement pressure) P1 and a predetermined time T1 obtained by taking a response delay in hydraulic pressure on the engagement side (S17₂). That is, provided that the hydraulic pressure in the main clutch is P_{MC}, the first sweep gradient can be obtained from an equation [dP1_{MC} = (P1 - P_{MC})/T1)]. Then, based on the first sweep gradient, the main clutch side hydraulic pressure P_{MC} sweeps up (S17₃). Namely, the engagement hydraulic pressure P_{MC} during that sweep-up is [P_{MC} = P_{MC} + dP1_{MC}]. The first sweep-up is continued until the holding pressure P1 is reached (S17₄). That is, the engagement hydraulic pressure P_{MC} of the main clutch sweeps up from a piston stroke pressure toward the holding pressure (target engagement pressure) P1 calculated based on the estimated torque, with the first sweep gradient.

Next, based on a vehicle speed (also, the input revolution), a second sweep gradient dP2_{MC} is calculated. Namely, a revolution change rate as a target of the input shaft revolution when the revolution has started to change is calculated, and then, based on an amount of change in hydraulic pressure calculated from the revolution change rate, the second sweep gradient dP2_{MC} is calculated. In this case, the second sweep gradient is gentler than the first sweep gradient. Then, the main clutch side hydraulic pressure sweeps up with the second sweep-up gradient (S17₆; P_{MC} = P_{MC} + dP2_{MC}). That sweep-up is continued until a predetermined engagement pressure (P1 + P2) is reached (S17₇; P_{MC} > P1 + P2). That is, the sweep-up is continued until a hydraulic pressure (P1 + P2) is reached, which allows the input revolution change rate to be detected by an input revolution number sensor 5 and the judgment (A) on the start of speed change to be made.

On the other hand, in the initial speed change control (S18) of the sub-clutch SC side, as shown in Fig. 6(b), a holding torque Cap_{MC} of the main clutch MC is calculated first based on the aforementioned hydraulic pressure P_{MC} (see S17₃, 17₆). Subsequently, based on the holding torque, a holding torque Cap_{SC} of the sub-clutch SC is calculated (S18₂). That is, provided that the input (turbine) torque is Tₜ, the holding torque of the main clutch is Cap_{MC}, the inertia torque of the vehicle is IΔω, and E and F are predetermined coefficients, sub-clutch holding torque Cap_{SC} can be obtained from an equation [Cap_{SC} = E x Tₜ - F x Cap_{MC} + I₀ ω]. Furthermore, the tie-up ratios (allowance) S1, S2 are calculated from the map value and the learnt value (S18₃). Then, based on the sub-clutch holding torque and the tie-up ratios S1, S2 and the like, the supplied hydraulic pressure P_{SC} on the sub-clutch side is calculated (S18₄). That is, provided that the frictional material area of the sub-clutch is G, the frictional coefficient thereof is µ, and the servo stroke pressure of the disengagement side is H, the hydraulic pressure P_{SC} on the sub-clutch side can be obtained from an equation [P_{SC} = (G/µ) x Cap_{SC} x S1 + H + S2]. Then, the disengagement control of the sub-clutch following the engagement side hydraulic pressure P_{MC} of the main clutch MC is returned (S18₅).

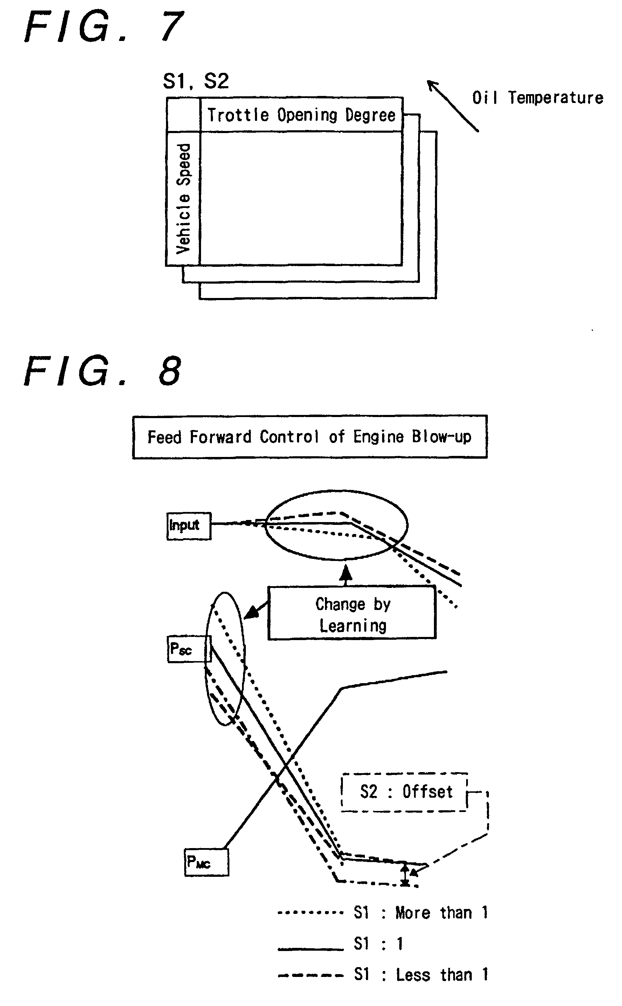

The aforementioned tie-up ratios (amounts) S1, S2 will be described with reference to Figs. and 9. The tie-up ratios S1, S2 are determined by any of a plurality of throttle opening degree/vehicle speed maps selected by a difference in oil temperature. That is, although the viscous resistance of oil varies depending on the oil temperature and consequently the response time of its hydraulic pressure varies, it is possible to prevent an unnecessary engine blow-up and an excessive tie-up. This is achieved by correcting the change in the response time because the tie-up ratio varies depending on the oil temperature. Thus, an appropriate speed change control is executed. Next, as shown in Fig. 8, the tie-up ratios S1, S2 are learnt by monitoring the amount of the engine blow-up based a change in the revolution of the input shaft and the tie-up ratios S1, S2 are corrected preliminarily (feed-forward control) . The first tie-up ratio S1 is for correcting the sweep-down gradient of the disengagement side hydraulic pressure P_{SC}. As shown with broken lines, when the engine is likely to blow up, a correction is made to obtain a gentle gradient, thereby disengaging the sub-clutch relatively late. On the other hand, as shown with dot lines, when the engine revolution is likely to decrease, a correction is made to obtain a steep gradient, thereby disengaging the sub-clutch relatively early. Concretely, as shown with a solid line, if the input shaft revolution causes no engine blow-up or tie-up, the sweep-down of the disengagement side hydraulic pressure P_{SC} as indicated by a solid line is an ideal characteristic and the first tie-up rate S1 is set to 1. If there is a decrease in engine revolution as shown with dot lines, the tie-up ratio S1 is set to a value above 1. If there is a blow-up in engine as shown with broken lines, the tie-up ratio is corrected to a value below 1. Thus, in executing a shift-up speed change operation by change-over, a predetermined overlap has to be achieved by the main clutch MC serving as an engagement side and the sub-clutch SC serving as a disengagement side. In this case, the sub-clutch side hydraulic pressure P_{SC} is determined so that a minute predetermined engine blow, which would not give any uncomfortable feeling to the driver, is provided. Such minute predetermined engine blow is detected according to the change in input revolution. Thus, an excessive tie-up as well as engine blow-up can be avoided.

The second tie-up ratio (amount) S2 is provided to correct an offset value relative to the input torque. As shown with a dashed line in Fig. 8, the offset value is set upward or downward relative to the disengagement side hydraulic pressure P_{SC} as indicated with a solid line. Namely, the aforementioned offset value is set, taking a response delay in hydraulic pressure on the engagement side into account. Then, an appropriate change-over timing is obtained from the response delay in hydraulic pressure on the engagement side, by causing the disengagement side hydraulic pressure P_{SC} to wait, using the offset value resulting from the second tie-up ratio S2. Then, the first and second tie-up ratios S1, S2 are gradually brought to optimum values as the learning is repeated.

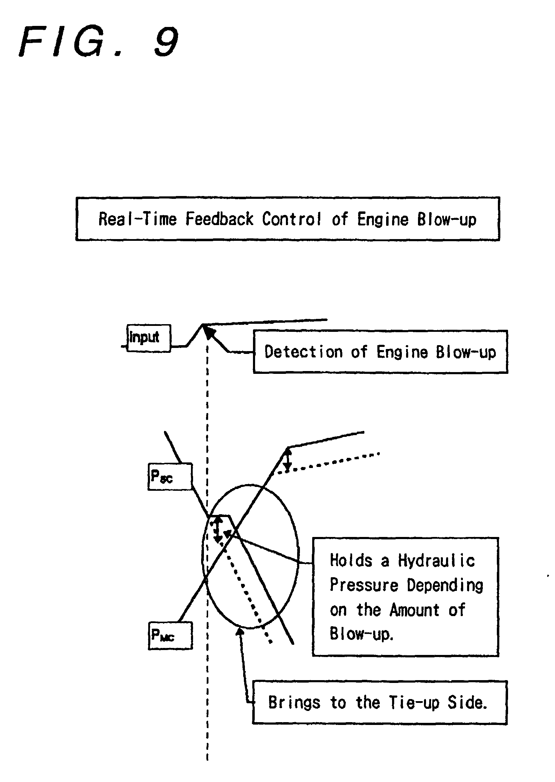

Furthermore, despite the learning on the tie-up ratios S1, S2, the engine blow-up sometimes occurs. Thus, as shown in Fig. 9, real-time feedback control is executed. That is, if an amount of engine blow larger than a predetermined value is detected by monitoring the input shaft revolution sensor, the operation for reducing the disengagement side hydraulic pressure P_{SC} is stopped immediately. This reducing operation remains stopped until the amount of engine blow reaches the predetermined value, and the second tie-up ratio S2 is offset so that the disengagement side hydraulic pressure is increased by a value corresponding to the amount of engine blow. As a result, the disengagement side hydraulic pressure is supplied relatively late so that a tie-up side (wherein the engagement side clutch and the disengagement side clutch are simultaneously engaged) is achieved. The engagement hydraulic pressure on the main clutch side is also increased. Then, during a speed change operation, the engine never blows over a predetermined value because of erroneous detection of engine revolution, throttle opening degree or the like.

Next, if the input shaft revolution sensor 5 detects a change in revolution of the input shaft, speed change start (A) is determined (S19), so that the torque phase speed change control (1) is terminated and the inertia phase speed change control (2) is started (S20). The inertia phase speed change control is executed by gradually raising (sweeping up) the main clutch hydraulic pressure P_{MC} from a hydraulic pressure wherein the holding torque Cap_{MC} of the main clutch MC is larger than the input torque T_{T}, by means of feedback control while detecting a change in the input revolution. This is continued until a predetermined ratio of total amount of revolution change by the completion of the speed change, for example 70[%] is achieved. Final control start (B) is determined when the predetermined ratio has been surpassed (S21), and then the final control is executed (S22).

Then, in the final control (S22), the main clutch hydraulic pressure P_{MC} is kept substantially constant or swept up with a very gentle gradient. This is continued until the total amount of change in the input shaft revolution is reached. If there is no change in revolution of the input shaft, the speed change termination (c) is determined (S23), and then completion control (4) is executed (S24). In the completion control, the engagement hydraulic pressure is raised with a steep gradient up to a line pressure by change-over of the shift valves or the like. When a predetermined period of time T_{fin} has lapsed (S25), the main clutch control is terminated (S26).

On the other hand, on the sub-clutch side, if the main clutch side is in the state of torque phase speed change control (1), the aforementioned initial speed change control (1) is continued. If the torque phase speed change control is terminated and the inertia phase speed change control (S27; MC>1) begins, the torque phase speed change control is terminated and release control (2) is started (S28). In the release control, the sub-clutch side hydraulic pressure P_{SC} is released with a steep gradient so as to achieve a drain state. Then, the release control is continued if the main clutch side is in a state lower than in completion control (4) (MC>4), namely, the inertia phase control (2), the final control (3) and the completion control (4). When the completion control is terminated (S29), the sub-clutch control is terminated (S30).

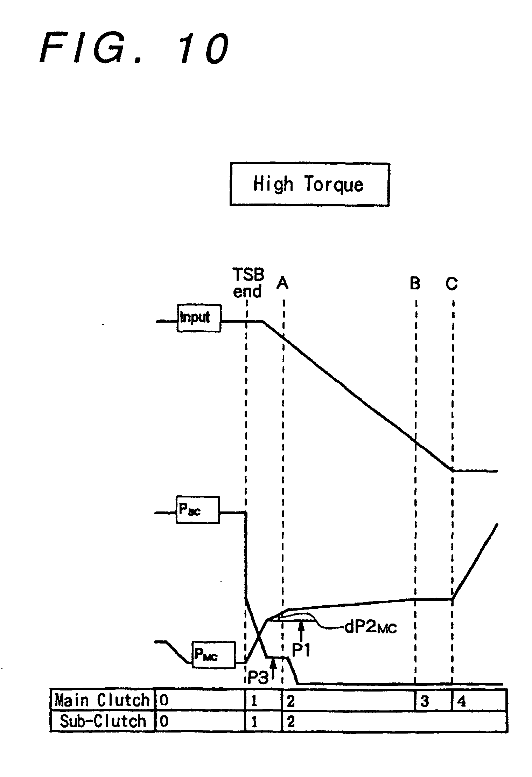

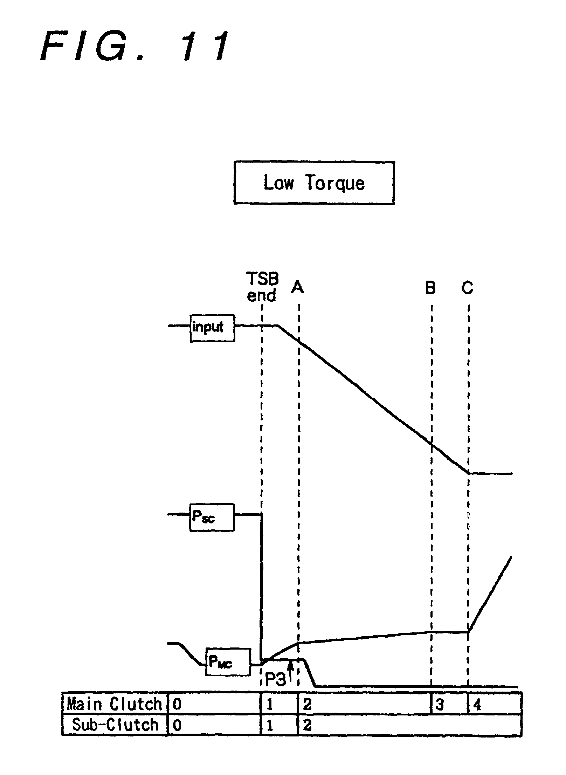

Then, referring to Figs. 10 and 11, the up-shift control in high and low torque states (including a state in which the input torque is 0 or negative, that is, the power-off state) will be described. As shown in these figures, numerals 0, 1, 2, ···· are allocated to the main clutch MC and the sub-clutch SC respectively. Each of these numerals indicates a control stage corresponding to a numeral in each parentheses in each control of Fig. 5.

Fig. 10 illustrates hydraulic characteristics in the high torque state in which up-shift (2-3 speed change) is executed with an accelerator pedal depressed gently (the power-on state). First, the engagement hydraulic pressure P_{MC} on the main clutch side is subjected to servo startup control (0) so that a predetermined piston stroke pressure is attained. Then, the servo startup control is continued over a predetermined period of time TSB (S12). The disengaging hydraulic pressure P_{SC} on the sub-clutch side is subjected to wait control (0) in which it is held at an engaging pressure such as a line pressure (S14).

Then, if the predetermined period of time (TBS_{end}) has lapsed, the main clutch side is subjected to torque phase control (1) while the sub-clutch side is subjected to initial speed change control (1) (S17, S18). The main clutch side hydraulic pressure P_{MC} sweeps up with a first sweep gradient (dP1_{MC}) at an estimated input torque toward the holding pressure P1 (S17₃). After the holding pressure P1 has been reached, it sweeps up with a second sweep gradient (dP2_{MC}) calculated according to a target revolution change rate (S17₆). Consequently, the main clutch MC serving as the engagement side is in the sliding state, in which the torque capacitance is gradually increased.

On the other hand, depending on the main clutch side hydraulic pressure P_{MC} and based on the learnt tie-up ratios S1, S2, the sub-clutch side hydraulic pressure P_{SC} sweeps down toward a predetermined releasing pressure P3 determined by the offset value based on the disengagement side servo (piston) stroke pressure H and the second tie-up ratio S2 (S18₄). As a result, in the sub-clutch SC which is on the disengagement side, the torque capacitance decreases gradually. In a state with no engine blow or no excessive tie-up, the input torque is shifted to the engagement side, so that the sub-clutch SC is subjected to inertia phase in which the revolution of the input shaft changes toward the third speed.

If the change in revolution of the input shaft is detected by the sensor 5, the start of the speed change A is determined. The main clutch side is subjected to inertia phase speed change control (2) and the sub-clutch side is subjected to release control (2) (S20, S22). In the inertia phase speed change control, while the revolution of the input shaft is being monitored, the main clutch side hydraulic pressure P_{MC} sweeps up with a relatively gentle gradient based on the feedback control. By release control (2), the sub-clutch side hydraulic pressure P_{SC} is released from the aforementioned predetermined disengaging hydraulic pressure P3 rapidly toward the drain state. Furthermore, on the main clutch side, final control (3) is executed by determination of the start of final control B (S22). Then, completion control (4) is executed by determination of the termination of the speed change C (S24). The engagement side hydraulic pressure P_{MC} rises up to a line pressure, and then the control is terminated. On the other hand, on the sub-clutch side, release control (2) is continued and the control is terminated in the drain state.

Fig. 11 is a diagram showing the characteristics of hydraulic pressure when shift-up is executed at a low torque or with the accelerator pedal released. First, the servo startup control (0) on the main clutch side and the wait control (0) on the sub-clutch side are terminated (TSBend). Consequently, the main clutch side is subjected to torque phase speed change control (1) while the sub-clutch side is subjected to initial speed change control (1).

At this time, in the torque phase speed change control, the holding pressure P1 calculated from an estimated input torque is not raised because the input torque is low [the input torque is 0 or negative (the power-off state)] and a sweep-up with the second sweep gradient (dP2_{MC}) based on the target revolution change is conducted. Although the sub-clutch hydraulic pressure P_{SC} in the initial speed change control depends on the aforementioned main clutch hydraulic pressure P_{MC}, it is kept at the predetermined disengaging pressure P3 based on the disengagement side servo stroke pressure H and the second tie-up ratio S2, due to the low hydraulic pressure P_{MC}.

Then, based on the determination of the speed change start A by detecting the change in revolution of the input shaft, the main clutch side is subjected to inertia phase speed change control (2) while the sub-clutch side is subjected to release control (2). In the inertia phase speed change control, while reading the input revolution, the engaging hydraulic pressure P_{MC} is swept up and in the release control, the disengaging hydraulic pressure P_{SC} is released quickly so as to achieve the drain state. Furthermore, on the main clutch side, the control is terminated after the final control (3) and the completion control (4). On the other hand, on the sub-clutch side, the disengaging zero pressure achieved in the above release control (2) is maintained until the completion control is terminated, and then, the control is terminated.

Then, at the time of up-shift speed change control, mainly by the main clutch hydraulic pressure P_{MC} which is on the engagement side, the disengagement side hydraulic pressure P_{SC} for the sub-clutch is controlled dependent on the engagement side hydraulic pressure P_{MC}. Thus, regardless of high torque (power on) state or low torque (power off) state, the speed change is always executed on the same control stage 0, 1, ····.

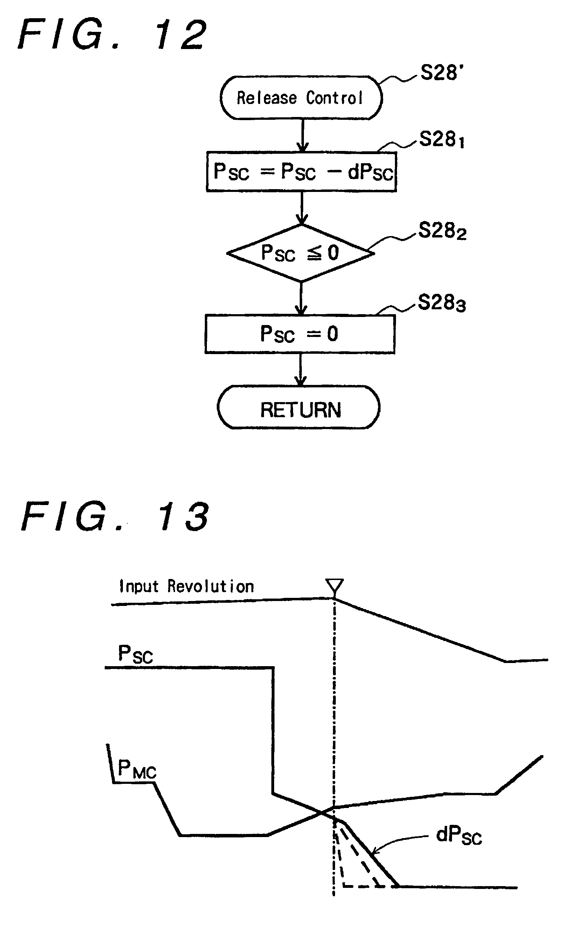

Then, other embodiments of the release control will be explained with reference to Figs. 12 through 14.

According to the previously described embodiment, in the release control (S28), the sub-clutch hydraulic pressure is released from the predetermined pressure P3 based on the piston stroke pressure H with a steep gradient until drained. Thus, although under the predetermined hydraulic pressure P3, the disengagement side sub-clutch SC is in a state of generating a dragging torque, if the input torque has a low value close to 0 as in the case of the power-off up-shift, the dragging torque by the predetermined hydraulic pressure P3 becomes larger than the input torque. Then, if the predetermined hydraulic pressure P3 is released all at once, the revolution of the input shaft is suddenly changed. As a result, the output torque is changed, so that the speed change may cause some kind of shock. In the power-on up-shift, if the complete release is conducted from the predetermined hydraulic pressure P3 slowly, the dragging torque is tied up with the engagement side torque, which may cause the output shaft torque to drop.

According to this embodiment, the disengaging hydraulic pressure P_{SC} is changed by the input torque. Namely, referring to Figs. 12 and 13, in release control (S28'), the change amount of the disengaging hydraulic pressure dP_{SC} is calculated from the estimated input torque. The sub-clutch disengaging hydraulic pressure P_{SC} is swept down by changing the sweep gradient based on the amount of the change in the hydraulic pressure (S28₁). That sweep-down is continued until the disengaging hydraulic pressure P_{SC} is completely drained (P_{SC} = 0) (S28₂, S28₃). Thus, by changing the disengaging hydraulic pressure P_{SC} during the release control depending on the traveling condition, an optimum speed change control is always executed.

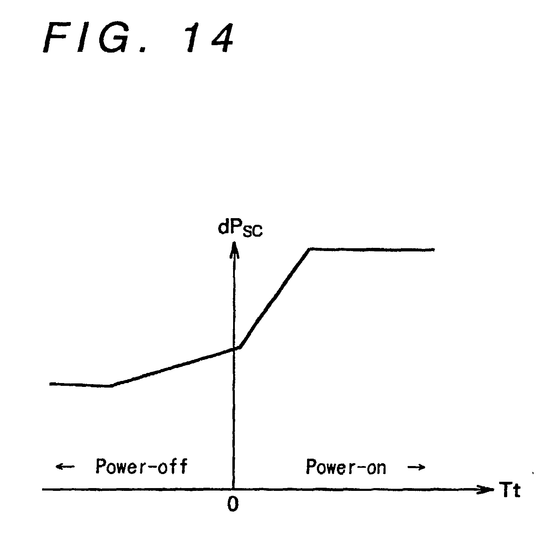

The amount of the change in the disengaging hydraulic pressure dP_{SC} is, as shown in Fig. 14, set to a relatively large value in the power-on state, and to a relatively small value in the power-off state. The both states are connected through a two-stage gentle gradient. Consequently, at the time of the power-on, the disengagement side hydraulic pressure P_{SC} (= P_{SC} - dP_{SC}) is released early to prevent the aforementioned tie-up from occurring. Furthermore, at the time of the power-off, the disengaging hydraulic pressure P_{SC} is reduced gradually to prevent any speed change shock from being caused.

Although the above embodiments have been described with respect to the 2-3 speed change control, it should be noted that the present invention can be applied to an up-shift control using any other pattern of change-over.

## Claims

1. A hydraulic control apparatus for an automatic transmission comprising: an input shaft to which a driving power from an engine output shaft is input; an output shaft connected to wheels; a plurality of frictional engagement elements (B4,B5,MC,SC) for changing a driving power transmission path between the input shaft and the output shaft; and hydraulic servos for engaging and disengaging said plurality of the frictional engagement elements (B4,B5,MC,SC); said hydraulic control apparatus engaging a first frictional engagement element (B5,MC) in said plurality of the frictional engagement elements while disengaging a second frictional engagement element (B4,SC) so as to achieve-an up-shift to a predetermined speed stage; further comprising hydraulic operating means for controlling hydraulic pressure of at least the hydraulic servos for said first and second frictional engagement elements; and a control section for receiving signals from respective sensors based on a vehicle traveling condition and outputting hydraulic control signals to said hydraulic operating means; said control section comprising engagement side hydraulic control means for calculating a change in hydraulic pressure applied to the hydraulic servo for said first frictional engagement element (B5,MC) and outputting the result to said hydraulic operating means; and disengagement side hydraulic control means for calculating a disengagement hydraulic pressure of the hydraulic servo for said second frictional engagement element, and outputting the result to said hydraulic operating means, **characterised in that** said disengagement hydraulic pressure is based on a holding torque of said first engagement element, which is calculated from the hydraulic pressure applied to the hydraulic servo for said first frictional engagement element, and on an input torque, which is inputted to said input shaft.

2. A hydraulic control apparatus for an automatic transmission according to claim 1 wherein the change in hydraulic pressure applied to the hydraulic servo for said first frictional engagement element (B5,MC) has a sweep-up with a gradient calculated from a holding pressure immediately before the start of an inertia phase which is obtained from an input torque, and a predetermined period of time which takes a response delay in hydraulic pressure into account.

3. An apparatus according to claim 1 or 2, wherein the disengaging hydraulic pressure of the hydraulic servo for said second frictional engagement element (B4,SC) has a gradient corrected by first tie-up correcting means which is set so as to ensure a predetermined amount of engine blow.

4. An apparatus according to claim 1, 2 or 3, wherein the disengaging hydraulic pressure of the hydraulic servo for said second frictional engagement element (B4,SC) is corrected by second tie-up correcting means for setting an offset value of the gradient of said disengaging hydraulic pressure.

5. A hydraulic control apparatus for an automatic transmission according to claim 4 wherein said first and second tie-up correcting means are modified by learning based on the amount of engine blow.

6. A hydraulic control apparatus for an automatic transmission according to claim 4 wherein the disengaging hydraulic pressure of the hydraulic servo for said second frictional engagement element (B4,SC) is controlled by a feedback control for detecting the amount of engine blow at the time of a speed change and preventing the disengaging hydraulic pressure from being decreased until said amount of engine blow reaches a predetermined value if said amount of engine blow exceeds a predetermined value.

7. An apparatus according to claim 4, 5 or 6, wherein said first and second tie-up correcting means change depending on the temperature of oil.

8. An apparatus according to any of claims 1 to 7, wherein the amount of change in hydraulic pressure in the hydraulic servo for said second frictional engagement element (B4,SC) until said second frictional engagement element is completely drained from a predetermined disengaging hydraulic pressure thereof is changed depending on a vehicle traveling condition.

9. A hydraulic control apparatus for an automatic transmission according to claim 8 wherein the amount of a change in hydraulic pressure until said predetermined disengaging hydraulic pressure is completely drained is set to a value which is larger at the time of power-on than at the time of power- off.

## Patentansprüche

1. Hydraulische Steuervorrichtung für ein automatisches Getriebe mit: einer Antriebswelle, auf die eine Antriebskraft von einer Motorabtriebswelle übertragen wird; einer Abtriebswelle, die mit Rädern verbunden ist; mehreren Reibeingriffselementen (B4, B5, MC, SC) zur Änderung eines Antriebskraftübertragungsweges zwischen der Antriebswelle und der Abtriebswelle; und hydraulischen Servosystemen zum Einrücken und Ausrücken der mehreren Reibeingriffselemente (B4, B5, MC, SC); wobei die hydraulische Steuervorrichtung ein erstes Reibeingriffselement (B5, MC) von den mehreren Reibeingriffselementen einrückt, während ein zweites Reibeingriffselement (B4, SC) ausgerückt wird, um ein Hochschalten auf eine vorbestimmte Schaltstufe zu erreichen; ferner mit hydraulischen Stelleinrichtungen zum Steuern eines hydraulischen Drucks zumindest der hydraulischen Servosysteme für das erste und zweite Reibeingriffselement; und einem Steuerteil zum Empfangen von Signalen von jeweiligen Sensoren auf der Grundlage einer Fahrzeugfahrbedingung und zum Ausgeben von hydraulischen Steuersignalen an die hydraulische Stelleinrichtung; wobei der Steuerteil aufweist: eine einrückseitige hydraulische Steuereinrichtung zum Berechnen einer Änderung des hydraulischen Drucks, der an das hydraulische Servosystem für das erste Reibeingriffselement (B5, MC) angelegt wird, und zum Ausgeben des Ergebnisses an die hydraulische Stelleinrichtung; und eine ausrückseitige hydraulische Steuereinrichtung zum Berechnen eines hydraulischen Ausrückdrucks des hydraulischen Servosystems für das zweite Reibeingriffselement und zum Ausgeben des Ergebnisses an die hydraulische Stelleinrichtung, **dadurch gekennzeichnet, daß** der hydraulische Ausrückdruck auf einem Haltedrehmoment des ersten Eingriffselements, das aus dem hydraulischen Druck berechnet wird, der an das hydraulische Servosystem für das erste Reibeingriffselement angelegt wird, und auf einem Antriebsdrehmoment, das auf die Antriebswelle übertragen wird, beruht.

2. Hydraulische Steuervorrichtung für ein automatisches Getriebe nach Anspruch 1, wobei die Änderung des hydraulischen Drucks, der an das hydraulische Servosystem für das erste Reibeingriffselement (B5, MC) angelegt wird, einen Anstieg mit einem Gradienten hat, der berechnet wird aus einem Haltedruck unmittelbar vor dem Beginn einer Trägheitsphase, die aus einem Antriebsdrehmoment ermittelt wird, und aus einer vorbestimmten Zeitperiode, die eine Reaktionsverzögerung des hydraulischen Drucks berücksichtigt.

3. Vorrichtung nach Anspruch 1 oder 2, wobei der hydraulische Ausrückdruck des hydraulischen Servosystems für das zweite Reibeingriffselement (B4, SC) einen Gradienten hat, der durch eine erste Blockierkorrektureinrichtung korrigiert wird, die festgelegt ist, um eine vorbestimmte Stärke des Motorstoßes sicherzustellen.

4. Vorrichtung nach Anspruch 1, 2 oder 3, wobei der hydraulische Ausrückdruck des hydraulischen Servosystems für das zweite Reibeingriffselement (B4, SC) durch eine zweite Blokkierkorrektureinrichtung zum Festlegen eines Abweichungswertes des Gradienten des hydraulischen Ausrückdrucks korrigiert wird.

5. Hydraulische Steuervorrichtung für ein automatisches Getriebe nach Anspruch 4, wobei die erste und zweite Blockierkorrektureinrichtung durch Lernen auf der Grundlage der Motorstoßstärke modifiziert werden.

6. Hydraulische Steuervorrichtung für ein automatisches Getriebe nach Anspruch 4, wobei der hydraulische Ausrückdruck des hydraulischen Servosystems für das zweite Reibeingriffselement (B4, SC) gesteuert wird durch eine Rückkopplungsregelung zum Ermitteln der Motorstoßstärke bei einem Schaltvorgang und zur Verhinderung der Verringerung des hydraulischen Ausrückdrucks, solange die Motorstoßstärke nicht einen vorbestimmten Wert erreicht, wenn die Motorstoßstärke einen vorbestimmten Wert überschreitet.

7. Vorrichtung nach Anspruch 4, 5 oder 6, wobei sich die erste und zweite Blockierkorrektureinrichtung je nach der Öltemperatur ändert.

8. Vorrichtung nach einem der Ansprüche 1 bis 7, wobei der Änderungsbetrag des hydraulischen Drucks im hydraulischen Servosystem für das zweite Reibeingriffselement (B4, SC), bis das zweite Reibeingriffselement den vorbestimmten hydraulischen Ausrückdruck vollständig abgebaut hat, je nach Fahrzeugbetriebsbedingung geändert wird.

9. Hydraulische Steuervorrichtung für ein automatisches Getriebe nach Anspruch 8, wobei der Änderungsbetrag des hydraulischen Drucks, bis der vorbestimmte hydraulische Ausrückdruck vollständig abgebaut ist, auf einen Wert festgelegt wird, der während des angetriebenen Zustands größer ist als während des antriebslosen Zustands.

## Revendications

1. Dispositif de commande hydraulique pour transmission automatique, comprenant : un arbre d'entrée auquel est appliquée une puissance d'entraînement communiquée par un arbre de sortie de moteur ; un arbre de sortie accouplé à des roues ; une pluralité d'éléments d'accouplement à friction (B4, B5, MC, SC) pour modifier un circuit de transmission de puissance d'entraînement entre l'arbre d'entrée et l'arbre de sortie ; et des servomécanismes hydrauliques pour accoupler et désaccoupler ladite pluralité d'éléments d'accouplement à friction (B4, B5, MC, SC); ledit dispositif de commande hydraulique accouplant un premier élément d'accouplement à friction (B5, MC) parmi ladite pluralité d'éléments d'accouplement à friction tout en désaccouplant un second élément d'accouplement à friction (B4, SC) afin de réaliser un passage d'une vitesse supérieure jusqu'à un palier de vitesse prédéterminé ; comprenant en outre un moyen d'actionnement hydraulique pour commander la pression hydraulique d'au moins les servomécanismes hydrauliques pour lesdits premier et second éléments d'accouplement à friction ; et une section de commande pour recevoir des signaux de capteurs respectifs sur la base d'une condition de circulation du véhicule et pour appliquer des signaux de commande hydraulique audit moyen d'actionnement hydraulique ; ladite section de commande comportant un moyen de commande hydraulique du côté accouplement pour calculer un changement de pression hydraulique appliquée au servomécanisme hydraulique pour ledit premier élément d'accouplement à friction (B5, MC) et fournir le résultat audit moyen d'actionnement hydraulique ; et un moyen de commande hydraulique du côté désaccouplement pour calculer une pression hydraulique de désaccouplement du servomécanisme hydraulique pour ledit second élément d'accouplement à friction et fournir le résultat audit moyen d'actionnement hydraulique, **caractérisé en ce que** ladite pression hydraulique de désaccouplement est fondée sur un couple de maintien dudit premier élément d'accouplement, qui est calculé à partir de la pression hydraulique appliquée au servomécanisme hydraulique pour ledit premier élément d'accouplement à friction, et sur un couple d'entrée qui est appliqué audit arbre d'entrée.

2. Dispositif de commande hydraulique pour transmission automatique selon la revendication 1, dans lequel le changement de pression hydraulique appliquée au servomécanisme hydraulique pour ledit premier élément d'accouplement à friction (B5, MC) a une variation avec un gradient calculé d'après une pression de maintien juste avant le début d'une phase d'inertie qui est obtenue à partir d'un couple d'entrée, et d'après un laps de temps prédéterminé qui tient compte d'un délai de réponse de la pression hydraulique.

3. Dispositif selon la revendication 1 ou 2, dans lequel la pression hydraulique de désaccouplement du servomécanisme hydraulique pour ledit second élément d'accouplement à friction (B4, SC) a un gradient corrigé par un premier moyen de correction d'asservissement établi de façon à assurer un régime prédéterminé du moteur.

4. Dispositif selon la revendication 1, 2 ou 3, dans lequel la pression hydraulique de désaccouplement du servomécanisme hydraulique pour ledit second élément d'accouplement à friction (B4, SC) est corrigée par un second moyen de correction d'asservissement pour établir une valeur décalée du gradient de ladite pression hydraulique de désaccouplement.

5. Dispositif de commande hydraulique pour transmission automatique selon la revendication 4, dans lequel lesdits premier et second moyens de correction d'asservissement sont modifiés par un apprentissage reposant sur le régime du moteur.

6. Dispositif de commande hydraulique pour transmission automatique selon la revendication 4, dans lequel la pression hydraulique de désaccouplement du servomécanisme hydraulique pour ledit second élément d'accouplement à friction (B4, SC) est commandé par une commande asservie pour détecter le régime du moteur au moment d'une variation de vitesse et empêcher la pression hydraulique de désaccouplement de diminuer jusqu'à ce que ledit régime du moteur atteigne une valeur prédéterminée si ledit régime du moteur dépasse une valeur prédéterminée.

7. Dispositif selon la revendication 4, 5 ou 6, dans lequel lesdits premier et second moyens de correction d'asservissement changent selon la température de l'huile.

8. Dispositif selon l'une quelconque des revendications 1 à 7, dans lequel l'ampleur de la variation de la pression hydraulique dans le servomécanisme hydraulique pour ledit second élément d'accouplement à friction (B4, SC) jusqu'à ce que ledit second élément d'accouplement à friction soit entièrement purgé d'une pression hydraulique de désaccouplement prédéterminée change selon une condition de circulation du véhicule.

9. Dispositif de commande hydraulique pour transmission automatique selon la revendication 8, dans lequel l'ampleur de la variation de la pression hydraulique jusqu'à ce que ladite pression hydraulique de désaccouplement prédéterminée soit entièrement purgée est établie à une valeur plus élevée au moment de l'allumage qu'au moment de l'arrêt.
